# EUROPEAN PATENT APPLICATION

(11) **EP 1 198 051 A2**
(43) Date of publication of application: **17.04.2002**
(21) Application number: 01123886.2
(22) Date of filing: 05.10.2001
(51) Int. Cl.: H02K 7/02

(54) **Power generation mechanism for wireless communication devices**

(30) Priority: 10.10.2000 JP 2000309257
(71) Applicant: SEIKO EPSON CORPORATION, Shinjuku-ku, Tokyo 163-0811 (JP)
(72) Inventor: Hama, Norio, Suwa-shi, Nagano-ken 392-8502 (JP)
(74) Representative: Hoffmann, Eckart, Dipl.-Ing.

(57) **Abstract**

To provide a wireless communication device including a transmitting device for transmitting control signals or data signals without any need for a battery, which can be downsized by using electric power generated from natural energy only as well as which can reduce its power consumption by using very weak waves for which no license is required by the Radio Law in Japan. The wireless communication device includes a small electric power generation device; a signal generation unit for generating a control signal or data signal to perform a wireless communication; a communication unit for transmitting/receiving the above-described signal; and a control unit for controlling the above-described unit, and the wireless communication device is driven by electric power generated by the above-described small electric power generation device, and a communication is performed during a supply of electric power generated by the above-described small electric power generation device, and various types of energy are stored as inertial energy to generate electric power through its torque.

## Description

### BACKGROUND OF THE INVENTION

### Field of the Invention

The present invention relates to a wireless communication device for transmitting/receiving radio wave signals on electric power generated by an electric power generation system using natural energy and to how to use the device.

### Description of the Related Art

A conventional technology for switching on/off a household electric appliance or various other equipments by means of control signals or code inputs through remote control or for data transmission through a transmitter has been widely used for home or business applications.

Among others, a technology for determining transmitted data for an electronic lock or remote control, recorded data in a recording medium, or input data entered with a ten-key pad as a user ID code, thereby performing lock/unlock operations has been used for building management and vehicle door lock.

On the other hand, wireless communication equipments using very weak waves include, for example, a keyless entry system, a door opener, or a mobile telephone receiver (a wearable vibrator separate from a main body of the mobile telephone) . These usually use frequencies in a 300 MHz band with their carriers modulated by the amplitude shift keying (ASK) or frequency shift keying (FSK) as well as a narrower occupied bandwidth and a transmission rate of approximately a few kilobits per second (Kbps).

For a communication equipment using such very weak waves of a frequency in the 300 MHz band, the Radio Law in Japan specifies that no license is required of any user or manufacturer thereof, and thus, it is finding wide application today in various cheap equipments for daily use.

In addition, such a wireless communication equipment consumes a relatively smaller power and it can operate on a primary battery such as a lithium button battery or a dry battery for a long period from a few months to one year.

The above-mentioned technology for transmitting control signals or data signals through remote control has been widely used for various remote control devices each containing a primary battery. Such a remote control device is no longer able to operate when its internal primary battery is exhausted and a larger power consumption for communication may require the primary battery to have a large capacity, which may prevent the remote control device from being downsized. Therefore, when a small primary battery is used, frequent battery replacement will be required. Particularly, a remote control device used for an electronic lock cannot meet both needs for an improved portability and a longer battery life when it is downsized.

As a prior art, electronic equipment with communication means over a radio wave which operates on a small electric power generation device has been described in the Japanese Patent Laid-Open No. 7-217280. Electric power generated by the above-mentioned electric power generation device is rectified and then stored in a large-capacitance capacitor to drive a transmission data signal generating circuit and a transmission wave forming circuit for transmitting transmission data over a radio wave. Another means for displaying the fact that transmitted data is received when the electronic equipment receives a radio wave has been also disclosed.

However, as awareness of ecological problems has been raised in the recent years, there is a need for an energy system which can be used for a long period without excretory substance or which can be configured to be circulating. For the above-mentioned prior art, a secondary battery called a large-capacitance capacitor or a supercapacitor is used but this battery would be used repetitively and finally become a waste at the end of its useful life. In addition, chemical substances used for power storage would lead to depletion of scarce mineral resources.

Although an ordinary wireless communication device requires driving electric power for its receiving operation, the above-mentioned prior art does not describe how to supply such electric power or how to perform the receiving operation.

In order to solve these problems, it is an object of the present invention to provide a wireless communication device in which the need for any battery used in a transmitting device for transmitting control signals or data signals is eliminated so that electric power generated only from natural energy can be used and downsizing can be implemented, and which can reduce power consumption thereof by using very weak waves for which no license is required by the Radio Law in Japan.

It is another object of the present invention to provide a receiving method used for the wireless communication device, which can use electric power generated from natural energy only.

### SUMMARY OF THE INVENTION

To attain the above objects, a wireless communication device according to claim 1 is a wireless communication device which includes: a small electric power generation device; signal generation means for generating a control signal or data signal to perform a wireless communication; communication means for transmitting/receivingthecontrolsignalordatasignal generated by the above-described signal generation means; and control means for controlling the above-described signal generation means and the above-described communication means, in which the above-described signal generation means and the above-described communication means are driven by electric power generated by the above-described small electric power generation device under the control of the above-described control means, wherein the above-described communication means performs a communication during the supply of electric power generated by the above-described small electric power generation device.

In the wireless communication device according to claim 2, display means is provided to indicate that the wireless communication device according to claim 1 is capable of performing a communication while the above-described electric power generation device continuously generates electric power.

In the wireless communication device according to claim 3, the above-described small electric power generation device according to claim 2 is an electric power generation device which includes: a rotational weight with an eccentric center of gravity; an electromagnetic transducer for generating electric power through the rotation of the above-described rotational weight; and a mechanism for converting rotational energy into inertial energy.

In the wireless communication device according to claim 4, the above-described mechanism according to claim 3 is a flywheel.

In the wireless communication device according to claim 5, the above-described small electric power generation device according to claim 2 is an electric power generation device which includes: a mechanism for storing elastic energy from an elastic element; and a mechanism for converting the elastic energy into rotational energy and then inertial energy.

In the wireless communication device according to claim 6, the above-described small electric power generation device according to claims 4 to 5 generates electric power by taking advantage of the above-described inertial energy.

In the wireless communication device according to claim 7, the above-described wireless communication device according to claim 6 performs a transmission and reception while the above-described rotational energy and inertial energy are generated.

In the wireless communication device according to claim 8, the above-described wireless communication device according to claim 7 is a wireless communication device built in an electronic lock and a wireless communication device mounted on an automobile, which perform a communication therebetween.

In the wireless communication device according to claim 9, the above-described wireless communication device according to claim 7 is a wireless communication device built in a mouse pointer, which performs a communication with a computer.

In the wireless communication device according to claim 10, the above-described wireless communication device according to claim 9 uses very weak waves.

In the wireless communication device according to claim 11, the above-described wireless communication device according to claim 7 is a wireless communication device built in an electronic wristwatch, which performs a communication with a wireless base station.

In the wireless communication device according to claim 12, the above-described electronic wristwatch according to claim 11 corrects the time in response to the above-described data signal.

### BRIEF DESCRIPTION OF THE DRAWINGS

FIG. 1 is a block diagram for showing an internal circuit of a wireless communication device according to the present invention;
FIG. 2 is a block diagram for showing another internal circuit of the wireless communication device according to the present invention, in which an inertial device is attached to a power generating coil 1;
FIG. 3 shows an internal structure of an electric power generation device 21 when an automatic generating system (AGS) is provided in combination with the inertial device in the wireless communication device according to the present invention;
FIG. 4A shows a rotational weight mechanism of the AGS in the wireless communication device according to the present invention;
FIG. 4B shows the internal structure of a toothed rotational wheel 23 in the wireless communication device according to the present invention;
FIG. 4C shows another implementation of an energy generator 22;
FIG. 5 is a block diagram for showing a wireless circuit portion in the wireless communication device according to the present invention;
FIG. 6 shows a relationship between a power control operation and communication packets in the wireless communication device according to the present invention;
FIG. 7 shows an electronic wristwatch for showing an application to which the wireless communication device according to the present invention is applied;
FIG. 8A shows the underside of a mouse for showing a second application to which the wireless communication device according to the present invention is applied;
FIG. 8B shows a personal computer for showing the second application to which the wireless communication device according to the present invention is applied; and
FIG. 9 shows a keyless entry system for showing a third application to which the wireless communication device according to the present invention is applied.

### DETAILED DESCRIPTION OF THE PREFERRED EMBODIMENTS

Now, embodiments of the present invention will be described below with reference to the attached drawings. A device has an automatic power generation mechanism (hereinafter referred to as automatic generating system (AGS)) built therein for generating electric power responsive to the movement of its wearer. The AGS consists of a rotor with an eccentric center of gravity, preferably, a rotational weight in the form of unilateral weight with the thicker outer portion and the thinner center portion for a large rotation moment, a speedup wheel train for increasing the ration speed of the rotational weight, a polarized AG rotor which rotates at a high speed through the rotational transmission of the speedup wheel train, an AG stator facing the AG rotor, and a power generating coil wound around the AG stator or an iron core connected to the AG stator.

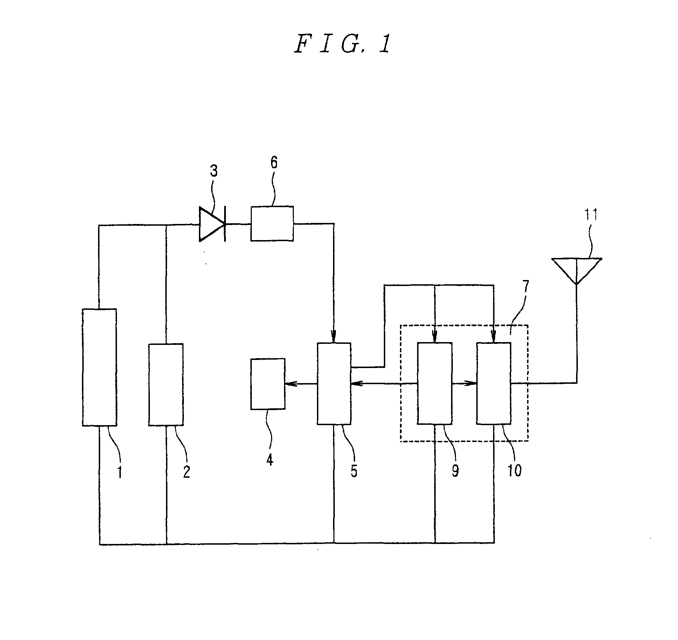

FIG. 1 is a block diagram for showing an internal circuit of the wireless communication device according to the present invention. In the drawing, a limiter circuit 2 with a switching transistor is provided in parallel with a power generating coil 1 in the above-described AGS. Similarly, a rectifier diode 3 is connected in series to the power generating coil 1 to rectify alternating current generated by the power generating coil 1. A power supply circuit 6 is a voltage step-down circuit consisting of a smoothing capacitor and a regulator, which causes a wireless circuit 7 described later to generate a direct-current voltage. Since the power generating coil can generate instantaneously a voltage of approximately more than 10 V at no load or a current of approximately a few mA at a load, the power supply circuit 6 converts this power into a direct-current power having a voltage of approximately 1 to 2 V and an output current of approximately 1 to 2 mA.

The power supply circuit 6 supplies driving power to a wireless control circuit 5. An indicator 4 provides some indication when a sufficient amount of driving power has been generated and is implemented, for example, with a light-emitting diode indicator or a liquid crystal display for displaying characters. When the indication occurs, the wireless circuit 7 is ready to operate.

Among several functions of the wireless circuit 7, a data signal processing circuit 9 has the function of generating data to be transmitted and the function of determining a received signal. Specifically, it generates a data signal from transmission data consisting of the determination code and ID code for a transmission signal described later or compares the determination code and ID code for a received signal with its corresponding codes stored therein. In the latter case, if these codes match, it communicates to the wireless control circuit 5 that the signal has been received and then informs of it via the indicator 4. Among several functions of the wireless circuit 7, a wireless signal processing circuit 10 has the functions of modulating transmission data into a high-frequency signal, of demodulating a high-frequency signal to be transmitted or received with an antenna 11, and of reproducing received data. The wireless signal processing circuit 10 requires the largest power consumption among all components of the wireless communication device according to the present invention.

According to the present invention, since the power generation function and the wireless circuit function are directly coupled to each other, the wireless circuit can operate only while electric power is generated. This eliminates the need for a secondary battery, thereby providing an equipment which is inherently capable of performing a wireless communication on natural energy only.

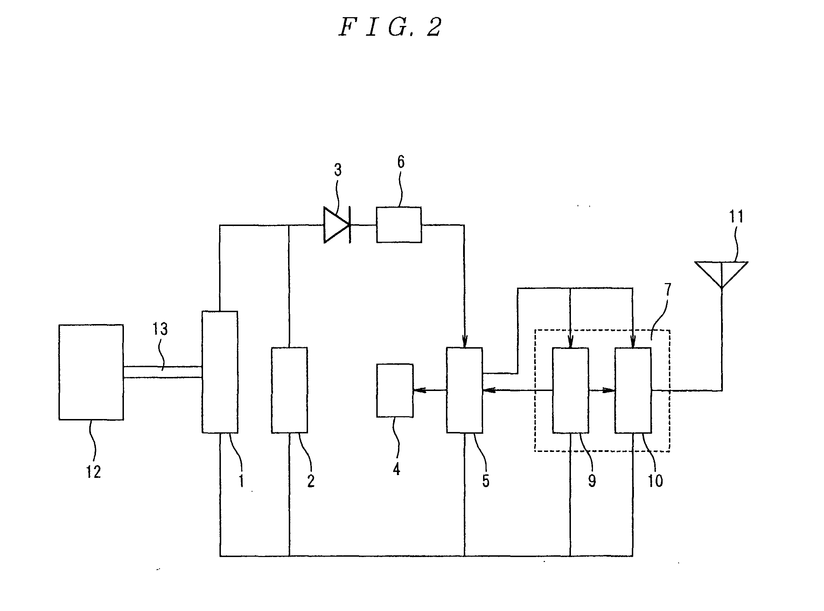

FIG. 2 is a block diagram for showing another internal circuit of the wireless communication device according to the present invention, in which an inertial device is attached to the power generating coil 1.

As described above, the AGS containing the power generating coil 1 converts its vibrational energy into rotational energy in a vibration environment through the rotor with an eccentric center of gravity. For this purpose, the inertial device 12 is attached as means for storing any vibrational or forced rotational energy applied to it. This component preserves energy in a mechanical manner and thus, it can continue to rotate on inertial energy for a while even if external energy supply is stopped.

According to the present invention, the attached inertial device 12 can allow the power generating coil 1 to continue its power generation operation for a while, so that the wireless circuit 7 can continue to operate.

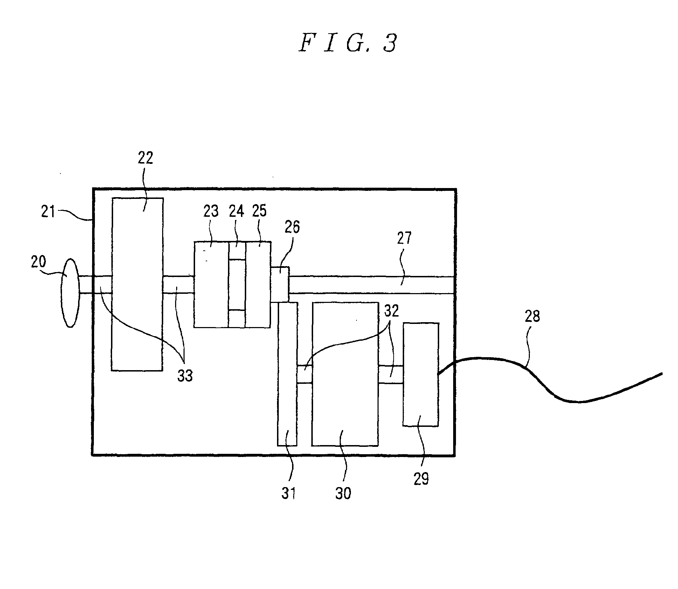

FIG. 3 shows an internal structure of an electric power generation device 21 when the AGS is provided in combination with the inertial device in the wireless communication device according to the present invention.

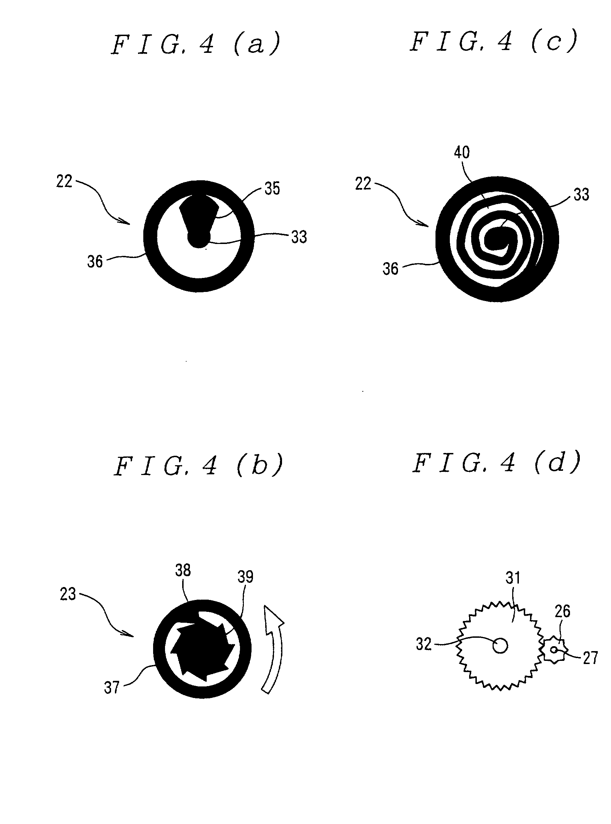

A knob 20 is attached to a shaft 33 so that rotational energy can be applied by hand from outside the device. An energy generator 22 is connected to the shaft 33. This part of the AGS contains a rotational weight in the form of unilateral weight with the thinner center portion. FIG. 4A shows a rotational weight mechanism of the AGS. When a rotational weight 35 in a cylinder 36 receives vibrations, it rotates about the shaft 33. If vibrational energy is detected and used in the device, the device can operate without the knob 20. Alternatively, if there is no vibration, the knob 20 can be attached for manual rotation.

The rotational energy transferred to the shaft 33 is then transferred to a toothed rotational wheel 23. FIG. 4B shows an internal structure thereof. When the shaft 33 and a gear 39 rotate in the direction of the arrow, a tooth 38 is caught by a tooth of the gear 39 to rotate the cylinder 37 in the same direction. When vibrations stop and hence the torque of the gear 39 stops, the tooth 38 of the cylinder 37 is released to allow only the cylinder 37 to continue rotating through inertial energy.

FIG. 4C shows another implementation of the energy generator 22. In the implementation, a spring 40 is used as an energy source. The spring 40 is manually wound up by rotating the knob 20 and when the knob 20 is released, the elasticity of the spring 40 causes the shaft 33 to rotate. Thus, a large force can be obtained instantaneously and then transferred to the toothed rotational wheel 23.

Next, the rotational energy is transferred to a connecting rod 24 and a rotating wheel 25 to rotate a pinion 26. In response to the rotation of the pinion 26, a gear wheel 31 rotates . The gear ratio of the pinion and gear wheel will convert a high-speed rotation into a low-speed rotation with a large torque. FIG. 4D shows an example of the pinion and gear wheel.

Next, the torque is transferred to a flywheel 30 via a shaft 32. The flywheel 30 has a large moment of inertia and therefore can store the inertial energy. For example, in the case of the spring 40, when the spring 40 is wound back to stop the supply of rotational energy, the rotation can be continued by the inertial energy and the toothed rotational wheel 23. Thus, the power generating coil 1 can continue to generate electric power.

The rotational energy is then transferred to the power generating coil 29 via the shaft 32. Generated electric power will be transferred over a cable 28.

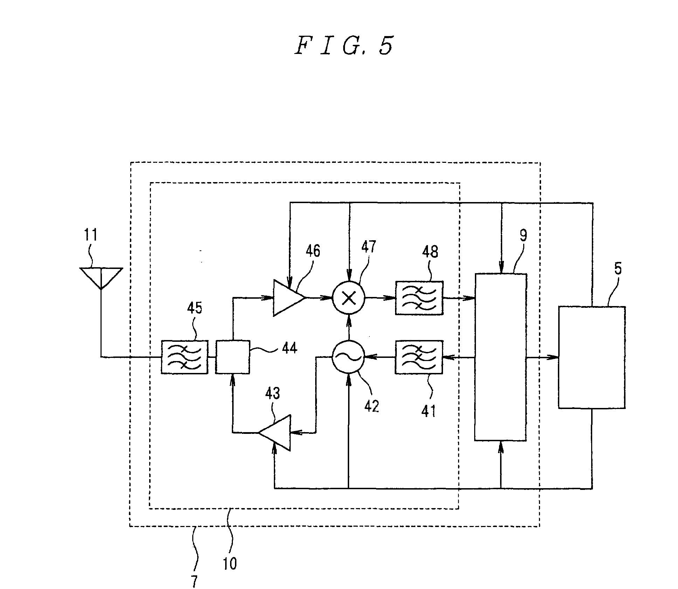

FIG. 5 is a block diagram for showing the wireless circuit portion in the wireless communication device according to the present invention. This kind of wireless communication equipment has been developed to use very weak power of waves to gain benefits in terms of cost. The present invention has been achieved to provide a wireless circuit which can be driven by natural energy, since natural energy is advantageous in terms of not only cost but also power consumption.

The wireless signal processing circuit 10 constituting the core of the wireless circuit is manufactured in a manufacturing process capable of implementing a circuit to operate at a low voltage. Such a manufacturing process includes the SOI (Silicon On Insulator) technique resulted from the advance of CMOS semiconductor technology. Particularly, the wireless circuit can be implemented with a power supply voltage of 1 V or lower by using a process with an MOS transistor threshold of 0.5 V or lower, and furthermore, 0.2 V or lower.

Now, the transmitting operation will be described below. When the wireless control circuit 5 recognizes that a sufficient amount of electric power has been generated, the power is supplied to the wireless circuit 7. The data signal processing circuit 9 starts to provide ID codes or determination codes stored therein in accordance with the internal clock. Any data is prefixed with a signal of bits "1" and "0" called a preamble for bit synchronization. The data transmission speed is approximately 600 to 2000 bps. Such a data string including the above-described preamble is called a packet and its length is approximately 50 bits. Thus, the data transmission speed of 1000 bps will correspond to a period of 50 msec per packet. This period is referred to as a transmission time.

During this length of period plus margins before and after that period, the wireless control circuit 5 continues to supply the generated electric power. For the transmitting operation as described herein, the electric power is applied only to functional portions required for transmission. Since a transmission data string is provided in the form of rectangular waves, it is band-limited by a baseband filter 41.

Then, it is supplied to a frequency modulator 42. This feature of converting a voltage into a frequency can be implemented with, for example, a voltage-controlled oscillator. In Japan, in the case where a carrier, as a very weak wave, has a frequency of 322 MHz or lower, the field intensity at a distance of 3 meters from the antenna of the transmitting device should be 500 µV/m or less. Therefore, for example, the frequency modulator has a circuit configuration in which an SAW resonator is used to directly implement Colpitts oscillation of 300 MHz to produce a carrier and the carrier is frequency-modulated using a modulation voltage. A power amplifier 43 is a circuit for amplifying the carrier modulated at a high frequency of 300 MHz. In providing very weak waves, this amplifier can be omitted. Moreover, a switching circuit 44 is switched to the transmitter end to connect the antenna 11. A filter 45 passes the 300 MHz high-frequency modulated carrier and suppresses undesired radiation noise. When an SAW resonance circuit is used, its basic oscillation mode can be performed at 300 MHz with an increased increment for the multiplied frequency and a higher frequency, and thus, this circuit can be also omitted.

Next, the receiving operation will be described below.

The 300 MHz high-frequency modulated carrier received with the antenna 11 passes through the filter 45 and then is supplied to a low-noise amplifier 46 for amplification because the switching circuit is switched to the receiver end. Next, it is converted into a signal of an intermediate frequency, for example, 10.7 MHz by a down-converter 47 and then passes through an intermediate-frequency filter 48 for FM detection. A detecting circuit is contained in the data signal processing circuit 9 in this figure. When the data is decoded, an ID or determination code in the preamble is verified for bit synchronization to detect that the data has been received. The detected signal is transferred to the wireless control circuit 5 and then indicated by the indicator 4.

The power control operation for the wireless control circuit 5 during the receiving operation is performed on the assumption that the receiving operation accompanies a transmitting operation or that a high-frequency signal to be received is transmitted periodically.

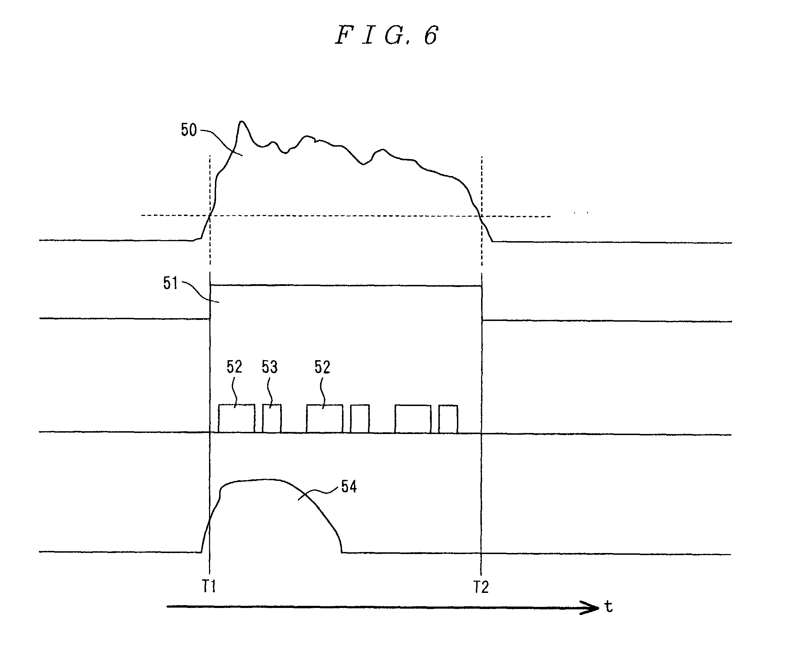

FIG. 6 shows a relationship between the power control operation and communication packets in the wireless communication device according to the present invention.

A waveform 54 of rotational energy generated by the energy generator 22 rises as shown. A voltage waveform 50 provided by the power generating coil 1 and rectified is smoothed and made constant by the power supply circuit 6 to produce a voltage waveform 51. The wireless control circuit 5 starts to drive at the time T1 and provides some indication through the indicator 4. Next, transmission data is provided and very weak waves are transmitted through a transmission packet 52. Then, an ACK (acknowledge) packet from the receiver end is sent out and it is received. In this example, these operations are repeated three times. Even if the energy supply from the energy generator 22 is stopped, the circuit can be driven by the time T2. For example, the period between T1 to T2 can be approximately 5 to 10 seconds in the case of the spring 40 and thus, the wireless circuit 7 can be driven satisfactorily during this period. If something in place of the spring or rotational weight described above is not limited in shape and size, this period can be further extended.

A wireless communication device having the receiving feature only cannot detect a timing of wave arrival but if data transmission is performed once every 5 to 10 seconds as described above, the date can be received at any time by using rotational energy generated by a spring or the like.

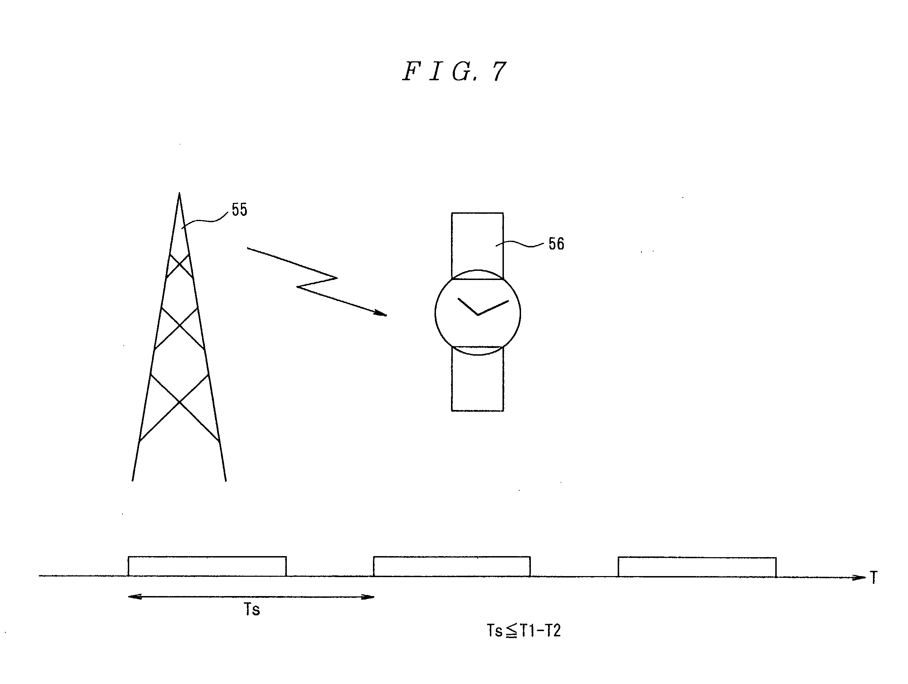

FIG. 7 shows an application to which the wireless communication device according to the present invention is applied.

A transmitting station 55 sends out time correction information. The transmitting station can be replaced by a mobile telephone, a personal computer, or the like. In order for an electronic wristwatch 56 to perform the time correction operation, correction data is sent out at intervals Ts. If the interval Ts has a length shorter than the period between T1 to T2, the receiver end can receive a signal without knowledge of its arrival timing. Although it may depend on what packet to be passed therebetween during the power supply, at least one packet can be passed and the time can be corrected if Ts has a length shorter than the period between T1 and T2.

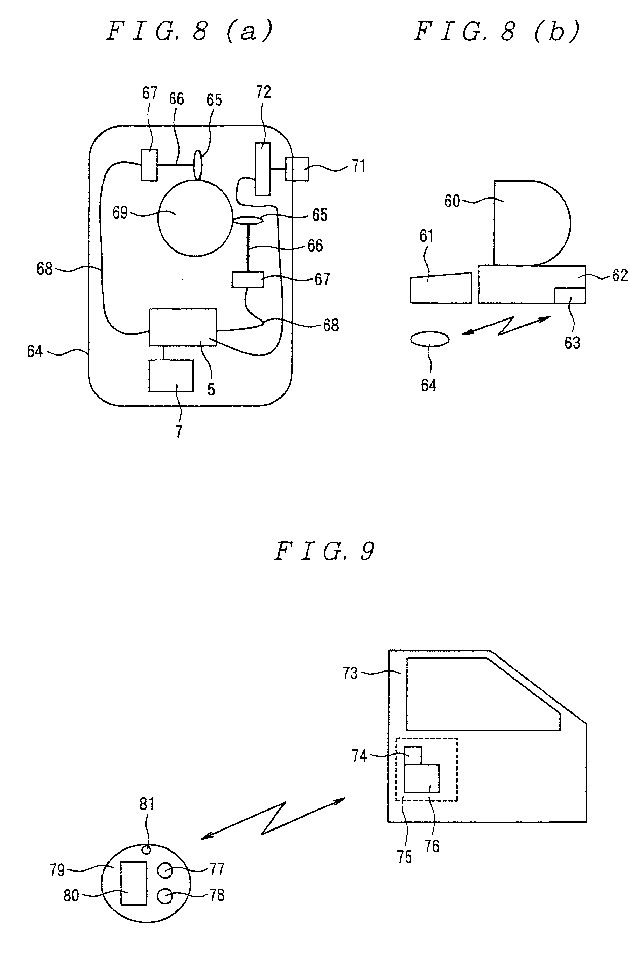

FIGS. 8A and 8B show a second application to which the wireless communication device according to the present invention is applied.

In the drawings, the present invention is incorporated in a personal computer and a mouse. The mouse 64 performs a wireless data communication with a wireless communication device 63 built in the personal computer 62. The power supply for the device 62 may be a commercial power supply or a solar battery.

FIG. 8A shows an underside of the mouse, and the movement of a ball 69 in the mouse 64 is transferred to a roller 65 and relative coordinates are obtained from the number of revolutions to display a pointer on a display 60. The rotation of the roller 65 is connected to an electric power generation device 67 through a shaft 66 according to the present invention. As compared with the electric power generation device shown in FIG. 3, the electric power generation device 67 is equivalent to that of FIG. 3 except that the energy generator 22 and the knob 20 are removed and as the mouse moves, the roller 65 rotates for power generation. The mouse generates transmission data when the mouse moves or when the mouse remains at rest with the click button pressed. While the mouse remains at rest, electric power can be generated by pressing the click button while a button 71 is held down. Another electric power generation device 72 can generate electric power by means of a mechanism for converting a pressure into rotational energy, for example, an attached mechanism using a gear or spring repulsion. Generated electric power will be transferred to the wireless control circuit 5 over a cable 68 and then radiated from the wireless circuit 7 with an antenna (not shown) . The receiving operation can be performed in a similar manner through the process described above with reference to FIG. 6.

FIG. 9 shows a third application to which the wireless communication device according to the present invention is applied.

In the drawing, the present invention is incorporated in a keyless entry system which may be one of suitable applications.

An electronic lock 79 contains a wireless communication device 80 according to the present invention. Also, it has operation buttons 77, 78. In addition, a check lamp 81 of LED is provided to verify a transmission. A wave including transmission data provided by the electronic lock 79 drives a door lock mechanism 75 formed in an automobile door 73 through a wireless communication equipment 76 installed in an automobile for lock and unlock operations.

When the door 73 is in the locked state and a door knob 74 is pulled up within a predetermined period of time after the wireless communication equipment 76 has received a wave transmitted by the electronic lock 79, the door lock mechanism 75 will release the door lock in response to a signal from a switch which operates in coordination therewith. On the contrary, when the door 73 is in the unlocked state, the door lock mechanism 75 will lock the door in response to the reception of such a wave.

One of the operation buttons 77, 78 is used for locking and the other is used for unlocking. When either of them is pressed once, transmission data will be transmitted as shown in FIG. 6. Transmission data partly differs according to whether it is intended for locking or unlocking, which is determined on the receiver end.

Next, the wireless communication equipment 76 determines the state of the door 73 according to the data and transmits a signal to inform that the operation completes successfully. The electronic lock 79 receives the signal and turns on the check lamp 81. Since the check lamp 81 is used to verify the function when the device is ready to supply electric power, when the transmitting operation is performed, or when the receiving operation completes successfully, a plurality of check lamps or different colors of check lamps may be provided.

Although the three applications for the wireless communication device according to the present invention have been described above, the present invention is not limited to them and it can have similar effects to those of the above-described embodiments when it applies to any vibratory location, for example, in a belt, a hat, a hair band, a supporter, or some other wearable equipment with a band, fastener tape, or other fastening means as well as to a beeper, an electronic notepad, a PDA, a mobile telephone bag, or some other portable equipment .

Although these embodiments have been described with reference to a communication method using radio waves, the present invention can be similarly implemented with an infrared communication technology.

Although these embodiments have been described with reference to the case of a wireless communication being performed with very weak waves in the 300 MHz band, the present invention can be applicable to any other wireless communication system with a larger output power in a different frequency band if the advance of processes used to manufacture wireless circuit ICs or the advance of circuitry allows for the development of a low-power system.

As described above, since the wireless communication device according to the present invention uses very weak waves for which no license is required by the Radio Law in Japan, it can be implemented as a low-power system. In addition, the present invention can provide an eco-friendly waste-free wireless communication device by incorporating an electric power generation system which operates on natural energy rather than batteries. Moreover, if vibrational or rotational energy is converted by a flywheel into inertial energy and then stored, power generation can be continued for a period of time and thus, such wireless communication devices can perform two-way communications with each other.

Any application to which the present invention is applied can take in natural energy without making a user aware of it. Therefore, the application compares favorably with conventional devices using battery in terms of usability.

## Claims

1. A wireless communication device, comprising:
a small electric power generation device;
signal generation means for generating a control signal or data signal to perform a wireless communication;
communication means for transmitting/receiving the control signal or data signal generated by said signal generation means; and
control means for controlling said signal generation means and said communication means,
in which said signal generation means and said communication means are driven by electric power generated by said small electric power generation device under the control of said control means,
wherein said communication means performs a communication during the supply of electric power generated by said small electric power generation device.

2. The wireless communication device according to claim 1,
wherein display means is provided to indicate that the wireless communication device is capable of performing a communication while said electric power generation device continuously generates electric power.

3. The wireless communication device according to claim 2,
wherein said small electric power generation device is an electric power generation device comprising:
a rotational weight with an eccentric center of gravity; an electromagnetic transducer for generating electric power through the rotation of said rotational weight; and a mechanism for converting rotational energy into inertial energy.

4. The wireless communication device according to claim 3,
wherein said mechanism is a flywheel.

5. The wireless communication device according to claim 2,
wherein said small electric power generation device is an electric power generation device comprising:
a mechanism for storing elastic energy from an elastic element; and a mechanism for converting the elastic energy into rotational energy and then inertial energy.

6. The wireless communication device according to claims 4 to 5,
wherein said small electric power generation device generates electric power by taking advantage of said inertial energy.

7. The wireless communication device according to claim 6,
wherein said wireless communication device performs a transmission and reception while said rotational energy and inertial energy are generated.

8. The wireless communication device according to claim 7,
wherein said wireless communication device is a wireless communication device built in an electronic lock and a wireless communication device mounted on an automobile, which perform a communication therebetween.

9. The wireless communication device according to claim 7,
wherein said wireless communication device is a wireless communication device built in a mouse pointer, which performs a communication with a computer.

10. The wireless communication device according to claim 9,
wherein said wireless communication device uses very weak waves.

11. The wireless communication device according to claim 7,
wherein said wireless communication device is a wireless communication device built in an electronic wristwatch, which performs a communication with a wireless base station.

12. The wireless communication device according to claim 11,
wherein said electronic wristwatch corrects the time in response to said data signal.
